# EUROPEAN PATENT APPLICATION

(11) **EP 2 319 807 A2**
(43) Date of publication of application: **11.05.2011**
(21) Application number: 09797602.1
(22) Date of filing: 23.06.2009
(51) Int. Cl.: C02F 1/52, C02F 1/66

(54) **METHOD FOR TREATING FLOOR POLISH STRIPPING WASTEWATER AND WASHING WASTEWATER**

(30) Priority: 04.07.2008 JP 2008176353
(71) Applicant: Diversey, Inc., Sturtevant, WI 53177-0902 (US)
(72) Inventor: KAYAMORI, Satoshi, Yokohama City Kanagawa 225-0012 (JP); KONDO, Tetsuro, Yokohama City Kanagawa 221-0045 (JP); KOMODA, Susumu, Yokohama City Kanagawa 221-0045 (JP)
(74) Representative: Ruschke, Hans Edvard
(86) International application number: PCT/IB2009/006558
(87) International publication number: WO 2010/007527

(57) **Abstract**

To provide a method for treating floor polish stripping wastewaters and washing wastewater that is suitable for treating stripping wastewater produced in stripping with a strongly alkaline stripping agent when a floor polish coating film coated and formed on a floor surface is recoated and for treating washing wastewater produced in surface washing with a floor cleaner having neutral to alkaline properties during periodic or daily washing, this method making it possible to perform operations within a limited interval by treating wastewater within a short time and removing solids, thereby reducing environmental loads. A method for treating stripping wastewater or washing wastewater by which solid-liquid separation process can be performed within a short time and with good efficiency by adding a polyamidine polymer flocculant and converting aggregated particles into nonadhesive flocks of an appropriate size.

## Description

### BACKGROUND OF THE INVENTION

### 1. Field of the Invention

The present invention relates to a method for treating stripping wastewater or washing wastewater generated by stripping or washing a film of an aqueous polymer-type floor polishing composition that has been applied to a floor surface. More specifically, the invention relates to a method for treating stripping wastewater generated when a film of a floor polish that has been coated and formed on a floor surface is stripped with a strongly alkaline stripping agent prior to recoating, or a method for treating washing wastewater generated from surface washing with a neutral to alkaline floor cleaner during regular and routine washing. That is, the invention relates to a method for treating floor polish stripping wastewater and washing wastewater which, by treating wastewater for a short time and removing solids, enables operations to be performed in a limited time and reduces environmental loads.

### 2. Description of the Related Art

A film composed of a floor finish composition is generally formed on the surface of wood floorings, chemical floorings made of synthetic resins, and stone floors made of concrete, marble or the like in department stores, supermarkets, mass merchandisers, retailers, convenience stores, schools, libraries, hospitals, social welfare facilities, airport facilities, railroad facilities and office buildings and the like in order to maintain the beauty of the flooring and protect the surface of the floor. Such floor finish compositions are described under "Definition of Terms in Testing Methods for Floor Polishes, General Rules," in JFPA (Japan Floor Polish Association) Standard - 00.

In this standard, floor polish compositions are broadly divided into aqueous, emulsion type and oil-based compositions. Aqueous floor polish compositions are further divided into polymer-type and wax-type compositions. Emulsion type and oil-based floor polish compositions are of only wax-type.

Aqueous polymer-type floor polish compositions currently predominate. Aqueous polymer-type floor polish compositions contain as the main ingredient a metal-crosslinked acrylic resin, and include as secondary ingredients synthetic waxes, alkali-soluble resins, plasticizers, film-forming aids and the like. Depending on the desired film properties, a urethane resin is sometimes also blended in.

Such floor polish compositions, when uniformly applied with a mop or the like onto a floor surface and dried, form a resin film endowed with a sheen and durability (such a film being referred to below as a "resin film"). Generally, the applying and drying operations are repeated so as to form from two to five layered films. In addition, with periodic cleaning, washing and additional coating are carried out, so that when the time comes for a stripping operation, there are often some 10 to 20 layers on the floor surface.

A floor surface coated with the above aqueous polymer-type floor polish (resin film) exhibits an attractive, glossy appearance. However, with the passage of time, dirt and wear such as scuff marks from walking form on the film, resulting in a loss of appearance.

For this reason, washing and rinsing operations using a neutral to alkaline floor cleaner (referred to below as "surface washing") are carried out at intervals of about once or twice per month.

The dirt that is not completely removed in the above surface washing builds up and, when the desired attractive appearance can no longer be maintained by continuing to repeat these operations-generally at a rate of about once a year, an operation to maintain the beauty of the floor surface (referred to below as "stripping") is carried out in which all of the floor polish film is stripped off and removed with a strongly alkaline stripping agent containing as the main ingredients an alkali and a solvent, following which floor polish composition is newly coated thereon and dried, thereby re-forming the floor polish film.

The floor polish wastewater generated during the above surface washing (referred to below as "washing wastewater") has a pH of about 6 to 9 (neutral to weakly alkaline), and the floor polish stripping wastewater generated during stripping (referred to below as "stripping wastewater") has a pH of about 9 to 12 (weakly alkaline to alkaline).

Up until now, such washing wastewater and stripping wastewater (collectively referred to below as "washing/stripping wastewater") has been collected in drums or the like and subjected to incineration or other treatment as industrial waste. However, when the surface area of the floor subjected to such operations is large, a considerable amount of washing/stripping wastewater must be transported from the worksite, in addition to which environmental problems such as CO₂ generation from incineration is also becoming a concern. For such reasons, there exists a desire for treatment methods that would entail temporarily treating the washing/stripping wastewater simply and for a short time at the worksite so that it does not kill microorganisms if poured into a sewer or a septic tank or so as to enable volume reduction and transport, and also reducing the amount of industrial waste to be treated. The pH (hydrogen ion concentration) in water quality standards for water that flows into public sewers, as stipulated by the Order for Enforcement of the Sewerage Service Act in Japan, has been set to "more than 5 but less than 9." The pH in wastewater standards set by the Water Pollution Prevention Law in Japan is "at least 5.8 but not more than 8.6" for wastewater discharged into areas other than seawater, and "at least 5.0 but not more than 9.0" for wastewater discharged into seawater.

Of the above, wastewater treatment methods that involve separating out and removing contaminants dissolved or dispersed in wastewater by adding an inorganic flocculant such as ammonium sulfate, polyaluminum chloride or ferric chloride to the wastewater, then adjusting the pH and, if necessary, adding and stirring in a natural or synthetic polymeric flocculant are widely known and conventionally used.

However, in washing/stripping wastewater, the amount of contaminants dissolved or dispersed in the wastewater is very large, and adhesive aggregated particles readily form during the flocculation step. In addition, in cases where these aggregated particles stick to each other and unite into masses, it has been impossible to smoothly carry out a step in which the contaminants (flock particles, or "flocculated solids" formed by the appropriate adhesion of aggregated particles) and the liquid (water) are separated (also referred to below as the "solid-liquid separation steep").

in this connection, Japanese Patent Application Laid-open No. 2000-288554 discloses a method for treating separated wastewater obtained by precipitating out and removing resin components from an alkaline floor polish stripping wastewater of pH 10 or above that includes an acrylic resin-containing floor polish and a floor polish alkaline washing solution, which method entails first adding from 0.1 to 8.0 wt % of an inorganic flocculant such as aluminum sulfate, polyaluminum chloride, polyferric sulfate or ferric chloride to an alkaline floor polish stripping wastewater, then adding a neutralizing agent to adjust the pH to between 5 and 7, and thereby inducing nonadhesive resin in the form of flock to deposit out.

However, because fine flock particles tend to form when such an inorganic flocculant is used, the filtration efficiency is very low. Also, due to wastewater, adhesive flock particles and masses resulting from the cohesion thereof end up forming, making filtration difficult.

Japanese Patent Application Laid-open No. 2000-230154 discloses a floor polish recovering composition, and method of recovery, which is characterized by including a polyvalent metal-containing metal compound and/or metal salt that undergoes ionic dissociation in water, such as calcium chloride or magnesium sulfate, and which recovers solids from a liquid having dissolved or dispersed therein a floor polish composition containing an α,β-unsaturated carboxylic acid-based polymer with carboxyl groups or salts thereof on the molecule, or a film obtained from the composition.

Japanese Patent Application Laid-open No. 2000-301162 discloses a floor wax stripping wastewater treatment agent, and a method of treatment therewith, which is composed of inorganic salts such as calcium chloride, ferric chloride, magnesium chloride, magnesium sulfate, ferrous sulfate, calcium sulfate, calcium hydroxide and calcium oxide, and which, when added to a floor wax stripping wastewater, causes contaminants in the wastewater to precipitate out.

However, even with these methods, because relatively fine flock particles are formed, the filtration efficiency remains low. Moreover, given that the filtrate at this time is alkaline, not only is it necessary to carry out a neutralization step, at the time of such a neutralization step, the polymer ingredients, etc. of the floor polish composition that were dissolved within the filtrate re-precipitate, forming flock particles, which must then be filtered again.

Japanese Patent Application Laid-open No. 2002-45868 discloses a floor polish stripping wastewater treatment method which entails treating a floor polish stripping wastewater that is strongly alkaline and contains dirt by the steps of: (a) using as the flocculant a salt (e.g., magnesium sulfate) of a metal having an ionizing power greater than that of iron and a chlorine-free acid to induce the flocculation of stripped film, dirt and dust; (b) after step (a), at the same time as step (a), or before step (a), neutralizing the strong alkalinity of the stripping wastewater with a chlorine-free acidic substance (e.g., sodium bisulfate); (c) after steps (a) and (b), removing the flocks by filtration; and (d) contacting the filtrate obtained in step (c) with activated carbon so as to adsorb onto the activated carbon and thereby remove solvent contained in the filtrate.

However, although the addition of magnesium sulfate and sodium bisulfate as a powder does provide a good flock particle-forming effect, when employed on wastewater, which has a high concentration of contaminants, the flock particles cohere to each other and unite, leading to the formation of non-uniformly neutralized masses. As a result, in cases where a large volume of wastewater was treated at one time, stirring the wastewater was difficult and the neutralizing step could not be smoothly carried out. Alternatively, when the magnesium sulfate or sodium bisulfate are prepared as aqueous solutions and added, because relatively fine flock particles form, the filtration step takes a long time, lowering the efficiency of the operation.

In addition, Japanese Patent Application Laid-open No. 2001-212598 discloses a method for treating floor polish washing wastewater by the steps of: neutralizing with an acidic substance a floor polish washing wastewater that is weakly to strongly alkaline and contains dirt; adding a flocculant to the wastewater neutralized in the above step, thereby flocculating stripped film, dirt and dust into the form of flocks, and removing the flocks by filtration; and passing the resulting filtrate over activated carbon so as to cause the solvent contained in the filtrate to be adsorbed onto the activated carbon and thereby removed.

Also, Japanese Patent Application Laid-open No. 2004-321861 discloses a method of treatment which involves the addition, to wastewater containing a large amount of resin, of a treatment agent containing both an organic acid that exhibits acidity when dissolved in water and a substance that dissolves in water and precipitates out ions having cohesive properties, thereby inducing the resin present in the wastewater to flocculate and separate off.

However, when an acid in the form of a powder is used, dissolution in wastewater is slow, which may lead to the formation of non-uniformly neutralized masses. Also, because the above flocculant alone does not have a sufficient flocculating effect, the flocculated particles are small and filtration takes time.

Finally, Japanese Patent Application Laid-open No. 2002-18447 discloses a solid liquid separation treatment method which, in a flocculation and separation operation within a system containing an adhesive component, first provides an intervening nonadhesive cohesion-preventing agent in the form of an insoluble inorganic powder, such as diatomaceous earth or calcium carbonate, so as to mutually isolate and prevent adhesion between the individual adhesive flocks that arise in the reaction step, then employs an at least two-stage solid-liquid separation step which includes neutralizing with an acid, typically 50% sulfuric acid, and using a flocculant, typically an inorganic powder flocculant, to induce flocculation, so as to remove individual flocks from the system.

This method has the advantage that, because a nonadhesive cohesion preventing agent is used, adhesion of the flock particles is suppressed, making the flocculated solids after filtration easy to collect.

However, when 50% sulfuric acid is used, the reaction with the resin film components dispersed in the water is rapid, which may give rise to localized aggregation and the formation of nonuniform masses. Hence, with an inorganic powder flocculant, the flocculating effect is inadequate and fine flocculated particles form, as a result of which the filtration step takes a long time, lowering the efficiency of the operation.

### SUMMARY OF THE INVENTION

Accordingly, the present invention relates to a method for treating stripping wastewater generated when a film of a floor polish that has been coated and formed on a floor surface is stripped with a strongly alkaline stripping agent prior to recoating, or a method for treating washing wastewater generated from surface washing with a neutral to alkaline floor cleaner during regular and routine washing. That is, the invention is a method for treating floor polish stripping wastewater or washing wastewater which, by treating wastewater for a short time and removing solids, enables operations to be performed in a limited time and reduces environmental loads. The object of the invention is to perform a flocculated solids-liquid separation process within a short time and with good efficiency by adding a flocculant and converting aggregated particles into nonadhesive flocks of an appropriate size.

Accordingly, in a first aspect, the invention provides a method for treating floor polish stripping wastewater which includes at least the following steps (B) and (C) carried out on the floor polish stripping wastewater:
(B) adding an acidic substance and producing aggregated particles by adjusting the pH-(JIS Z-8802:1984 "pH Measurement -Methods") of raw stripping wastewater at 25°C to between 5 and 8;
(C) adding a polyamidine polymer flocculant and forming large flocks from the aggregated particles.

In a second aspect, the invention provides a method for treating floor polish stripping wastewater according to the first aspect which further includes, before step (B), the step (A) of adding a nonadhesive cohesion-preventing agent having a poor ionic dissociation in water.

In a third aspect, the invention provides a method for treating floor polish stripping wastewater according to the first aspect which further includes, after step (C), the step (D) of separating the flocculated solids and liquid,

In a fourth aspect, the invention provides a method for treating floor polish stripping wastewater according to the second aspect which further includes, after step (C), the step (D) of separating the flocculated solids and liquid.

In a fifth aspect, the invention provides a method for treating floor polish stripping wastewater according to the second and/or fourth aspect, wherein the cohesion-preventing agent used in step (A) is at least one selected from among aluminium oxide and calcium sulfate.

In a sixth aspect, the invention provides a method for treating floor polish stripping wastewater according to any of the foregoing aspects, wherein the acidic substance used in step (B) is at least one selected from among sulfuric acid, hydrochloric acid, sulfamic acid, and citric acid.

In a seventh aspect, the invention provides a method for treating floor polish washing wastewater which includes at least the step (C') of adding a polyamidine polymer flocculant to the floor polish washing wastewater and forming large flocks.

In an eighth aspect, the invention provides a method for treating floor polish washing wastewater according to the seventh aspect which further includes, after the step (C'), the step (D') of separating flocculated solids and liquid.

In a ninth aspect, the invention provides a method for treating floor polish washing wastewater according to the seventh and/or eighth aspect which further includes, before the step (C'), the step (B') of adding an acidic substance and producing aggregated particles by adjusting the pH (JIS Z-8802: 1984 "pH Measurement Methods") of raw washing wastewater at 25°C to between 5 and 8.

In a tenth aspect, the invention provides a method for treating floor polish washing wastewater according to the ninth aspect which further includes, before step (B'), the step (A') of adding a nonadhesive cohesion-preventing agent having a poor ionic dissociation in water.

In an eleventh aspect, the invention provides a method for treating floor polish washing wastewater according to the tenth aspect, wherein the cohesion-preventing agent used in step (A') is at least one selected from among aluminum oxide and calcium sulfate.

In a twelfth aspect, the invention provides a method for treating floor polish washing wastewater according to any one of the ninth to eleventh aspects, wherein the acidic substance used in step (B') is at least one selected from among sulfuric acid, hydrochloric acid, sulfamic acid, and citric acid.

The inventive method for treating floor polish stripping wastewater, by including the steps of, with respect to a floor polish stripping wastewater: (B) adding an acidic substance and producing aggregated particles by adjusting the pH (JIS Z-8802: 1984 "pH Measurement Methods") of the raw wastewater at 25°C to between 5 and 8; (C) adding a polyamidine polymer flocculant and forming large flocks from the aggregated particles; and also, where appropriate, before step (B), (A) adding a nonadhesive cohesion-preventing agent having a poor ionic dissociation in water; and/or, after step (C), (D) separating the flocculated solids and liquid, has the advantage of, in the treatment of floor polish stripping wastewater, enabling the aggregated particles to be converted into nonadhesive flock of an appropriate size and enabling the flocculated solids-liquid separation step to be efficiently carried out in a short time.

Also, the inventive method for treating floor polish washing wastewater, by including, with respect to a floor polish washing wastewater, at least a step of: (C') adding a polyamidine polymer flocculant to the floor polish washing wastewater and forming large flocks; and also the steps of, where appropriate, after step (C'), (D') separating flocculated solids and liquid; before step (C'), (B') adding an acidic substance and producing aggregated particles by adjusting the pH (JIS Z-8802:1984 "pH Measurement Methods") of raw washing wastewater at 25°C to between 5 and 8; and, before step (B'), (A') adding a nonadhesive cohesion-preventing agent having a poor ionic dissociation in water, has the advantage of, in the treatment of floor polish washing wastewater, enabling the aggregated particles to be converted into nonadhesive flock of an appropriate size and enabling the flocculated solids-liquid separation step to be efficiently carried out in a short time.

### DESCRIPTION OF THE PREFERRED EMBODIMENTS

Preferred modes for carrying out the present invention are described in detail below.

First, the method for treating floor polish stripping wastewater is described.

The main ingredients of the stripping agent used in the stripping step are an alkali agent which destroys metal crosslinkages within the resin film (e.g., amines, ammonia, caustic soda), and an organic solvent which causes the resin film to swell (e.g., alcohol-based solvents, glycol-based solvents). Secondary ingredients such as surfactants, sequestrants and wetting agents are also included. The stock solution of stripping agent has a pH (JIS Z-8802: 1984 "pH Measurement Methods"; the same applies below) of between about 11 and 14 and, at the time of use, is employed following a 5-fold to 30-folk dilution.

The above stripping agent for floors is not subject to any particular limitation. Illustrative examples include those having the trade names GET-OFF (available from Johnson Diversey Co., Ltd.), POWER GO (Johnson Diversey Co., Ltd.), NEW SUPER ALL-GO (Johnson Diversey Co., Ltd.), SUPER ALL-GO HG TEISHU (Johnson Diversey Co., Ltd), POWER GO PREMIUM (Johnson Diversey Co., Ltd.), J REMOVER (Johnson Diversey Co., Ltd.) and J REMOVER S (Johnson Diversey Co., Ltd.), all of which are composed primarily of an alkali agent such as the metal salt of an alkali hydroxide and an amine compound such as ethanolamine, in combination with a solvent selected from among glycol-based solvents (e.g., diethylene glycol monomethyl ether, diethylene glycol monoethyl ether, dipropylene glycol monomethyl ether, dipropylene glycol monoethyl ether) and aromatic alcohols (e.g., benzyl alcohol).

The stripping step is an operation in which, after removing dirt and grime on the floor surface to some degree using a dust mop, broom, vacuum cleaner or the like, an aqueous solution of stripping agent diluted with water is applied to the floor with a mop or the like, the resin film is completely stripped or surface stripped while applying physical pressure with a polisher or automated floor cleaner on which a pad has been mounted, and wastewater is recovered using a squeegee or a wet vacuum. The resin film is dissolved and removed under chemical action by the stripping agent ingredients and physical action by the polisher or automatic floor cleaner. A floor polish stripping wastewater is generated during such stripping. The recovered stripping wastewater includes a mixture of stripping agent and cleaner dilution, resin film, dirt, dust and the like. This stripping wastewater has an alkaline to strongly alkaline pH of between about 9 and 12. The nonvolatiles content made up of the mixture of resin film, dirt, dust and the like in the stripping wastewater account is about 1 to 10%.

The above floor polish stripping wastewater that has been recovered is treated by the following steps making up the inventive method for treating floor polish stripping wastewater.

The inventive method for treating floor polish stripping wastewater includes at least the steps of, with respect to a floor polish stripping wastewater: (B) adding an acidic substance and producing aggregated particles by adjusting the pH of the raw wastewater at 25°C to between 5 and 8, and (C) adding a polyamidine polymer flocculant and forming large flocks from the aggregated particles.

The purpose of adding an acidic substance in above step (B) is to adjust the pH to between 5 and 8, and thereby produce aggregated particles. Adding an acidic substance lowers the dissolution or dispersion stability of resin film and the like which is dissolved or dispersed in the stripping wastewater, causing it to precipitate out. Also, neutralizing the alkalinity from the stripping agent facilitates the secondary treatment of filtrate based on, for example, the Sewerage Service Act or the Water Pollution Prevention Law in Japan. Hence, in cases where the wastewater to be treated is already within a pH range of from 5 to 8, as with the subsequently described washing wastewater, it is not always necessary to add an acidic substance.

Acidic substances that may be used in above step (B) include inorganic acids and organic acids. Illustrative examples of inorganic acids include hydrochloric acid, sulfuric acid, sodium bisulfate and sulfamic acid. Illustrative examples of organic acids include malic acid, acetic acid, oxalic acid, tartaric acid and citric acid. Of these, hydrochloric acid, sulfuric acid, sulfamic acid and citric acid are preferred. From the standpoint of environmental concerns and odors, sulfuric acid, sulfamic acid and citric acid are especially preferred.

The above acidic substance is preferably used as a 5 to 25 wt % aqueous solution, and most preferably as a 10 to 20 wt % aqueous solution. The reason is that, when the acidic substance is a powder, dissolution in the stripping wastewater becomes slower, which tends to give rise to nonuniform flocculation. Also, when the concentration of the acidic substance in the aqueous solution is too low, such as below 5 wt %, a large amount of a dilute aqueous solution of the acidic substance has to be added, which lengthens the treatment operation time and also generates a large amount of filtrate that must be discharged following nitration.

The above acidic substance is preferably added by a method which involves gradual dropwise addition while checking the pH with a pH meter or the like. In the subsequently described washing wastewater, when the concentration of resin film dissolved or dispersed in the wastewater is low, the acidic substance may be added in the form of a powder.

As neutralization proceeds under stirring, there will be a tendency for foaming to occur in the stripping wastewater being treated. It is thus desirable to add a foam inhibitor so as to prevent foaming and make it easy to check the status of aggregated particle and flock formation.

In the inventive method for treating floor polish stripping wastewater, the polyamidine polymer flocculants used in above step (C) is added for the purpose of forming large flocks. That is, the large aggregated particles about 13.1 to 2 mm in size that have formed in step (B) form into large flocks about 3 to 20 mm in size on passing through step (C). At this time, in addition to flocculated solids from the resin film, dirt and dust are also taken up and agglomerated into the flocks.

The pH range in which the above polyamidine polymer flocculant exhibits desirable effects is between 3 and 8, and preferably between 5 and 7. Outside of this range, desired flocculating effects are difficult to obtain.

Polyamidine polymer flocculants are generally in the form of powders, which take time to dissolve in water. For this reason, it is preferable to add such a flocculant to water beforehand so as to prepare a 0.5 to 1.5 wt % aqueous solution.

The polyamidine polymer flocculants may be produced by the method described in Japanese Patent No. 2624089. Commercial products that may be used include those available under the trade names ARONFLOC CV-300 (MT AquaPolymer, Inc.) and DIAFLOC KP-7000 (Dia-Nitrix Co., Ltd.).

In the inventive method for treating floor polish stripping wastewater, the step (A) of adding a nonadhesive cohesion-preventing agent having a poor ionic dissociation in water may be performed before above step (B).

The above step (A) of adding a nonadhesive cohesion preventing agent having a poor ionic dissociation in water is carried out for the purposes of providing nuclei of aggregation for the resin film and the like that are dissolved or dispersed in the stripping wastewater, and conferring nonadhesiveness to the aggregated particles that form in step (B).

The nonadhesive cohesion-preventing agent used in step (A) is a substance which has a poor ionic dissociation in water, such as a water-insoluble inorganic substance. Illustrative examples include diatomaceous earth, bentonite, kaolin, clay, calcium carbonate, aluminum oxide, glass powder, various types of powdered rock, clay and gypsum (calcium sulfate). Of these, gypsum is especially preferred because the quality is relatively stable and the flocculated solids following treatment have a low water content.

According to Rikagaku Jiten [Dictionary of physics and chemistry] (Third Edition, Iwanami Shoten, 1981), the solubility of calcium sulfate dihydrate in water is about 0.2 g/100 g, which is very low. Moreover, because this has a neutral pH, even when added, it simply remains suspended in the stripping wastewater and substantially no reaction arises. According to the same edition of *Rikagaku Jiten,* the solubility of aluminum oxide in water is about 1 mg/L, which is very low.

These nonadhesive cohesion-preventing agents may be used singly or as combinations of two or more types, and two or more types may be added at the same time or consecutively to the stripping wastewater to be treated. The amount of addition is typically in a range of from 1 to 10 wt %, and preferably from 2 to 7 wt %, based on the stripping wastewater. When added in an amount greater than 10 wt %, the formation of aggregation nuclei for the resin film and the like dissolved or dispersed in the stripping wastewater and the nonadhesiveness-conferring effect reach saturation, so that clouding arises in the filtrate, in addition to which the treatment costs become higher, which is economically disadvantageous. On the other hand, at an amount of addition below 1 wt %, the cohesion preventing effect is poor.

In cases where the type of resin film formed by the floor polish composition and the floor surface maintenance history are clearly known, or in cases where the glass transition point of the aqueous resin dispersion used in the floor polish composition is known to be high or the concentration of non-volatiles in the stripping wastewater is known to be low, step (A) of adding a cohesion-preventing agent may be omitted.

Also, in the inventive method for treating floor polish stripping wastewater, the step (D) of separating the flocculated solids and liquid may be carried out after above step (C).

The above step (D) of separating the flocculated solids and liquid may be carried out by placing a 50 to 300 mesh filter fabric on a strainer or the like, and carrying out gravity filtration. Illustrative examples of the material making up the filter fabric include nonwoven fabric, nylon, polyethylene, polypropylene, polyester, glass fibers and stainless steel. Preferred use may be made of polyethylene because the mesh openings are uniform and the fabric is strong, easy to wash, and reusable.

Because the large flocks which have formed in step (C) are nonadhesive and have a good dewaterability, they do not cling to the filter fabric or clog the filter pores. Hence, 15 liters of wastewater can be filtered out at a filtration rate of about 30 a to 60 seconds, enabling a high operation efficiency to be achieved. The flock can be wrapped up and squeezed within the filter fabric, helping to make this operation simple. Also, the filter fabric is reusable, which is economical. Given that the flocculated solids of the resin film, and also dirt, sand and the like are taken up within the large flocks formed in step (C), the flocks do not pass through the filter fabric, enabling a clear filtrate to be obtained.

In steps (A) to (C) of the inventive method for treating floor polish stripping wastewater, in order to have a uniform reaction proceed, it is desirable to carry out these steps while stirring the stripping wastewater. Stirring may be carried out using a stirring rod or an agitator. Also, it is possible to use chemicals such as a salting-out agent and a polymer flocculant other than a polyamidine polymer flocculant, or to add, for example, a deodorizing and solvent adsorption step using activated carbon or the like.

Specifically, along with the nonadhesive cohesion-preventing agent used in step (A), a salting-out agent may be concomitantly used in order to promote the flocculating reaction, thereby enabling relatively uniform fine particles to be formed. Examples of such salting-out agents include magnesium chloride, calcium chloride and magnesium sulfate. Examples of polymer flocculants other than polyamidine polymer flocculants that may be concomitantly used include polyacrylate-type cationic flocculants, polyacrylamide-type anionic flocculants, polyamine-type polymer flocculants, polydialkyldimethylammonium chloride-type polymer flocculants, dicyandiamide-type polymer flocculants and amino condensation-type polymer flocculants. When the polyamidine polymer flocculant is used together with these other types of polymer flocculants, flock having even better dewaterability can sometimes be obtained. Concomitant use may also be made of aluminum sulfate as a neutralizing agent/flocculant for the purpose of enhancing dewaterability.

By carrying out a deodorizing and solvent adsorption step with activated carbon at the same time as, or after, step (D) in which the flocculated solids and liquid are separated, the biological oxygen demand (BOD) value decreases, enabling the environmental load to be reduced even further.

Next, the method for treating floor polish washing wastewater is described.

The main ingredients of the floor cleaner used in the above-described surface washing are a surfactant and a sequestrant. Secondary ingredients include a small amount of alkali agent. The stock solution has a pH that is from neutral to alkaline. At the time of use, the floor cleaner is diluted from about 20-fold to about 80-fold with water. The pH of the washing wastewater is generally from about 6 to about 9.

Illustrative examples of such floor cleaners include those having the trade names MURIN. FORWARD (available-from Johnson Diversey Co., Ltd.), FORWARD NON-RINSE (Johnson Diversey Co., Ltd.), DEEP SCRUBBER (Johnson Diversey Co., Ltd.), DAILY CLEANER (Johnson Diversey Co., Ltd.), BANNO CLEANER (Johnson Diversey Co., Ltd.) and SANITARY CLEANER (Johnson Diversey Co., Ltd.).

In the inventive method for treating floor polish washing wastewater, at least the step (C') of adding a polyamidine polymer flocculant to the floor polish washing wastewater and forming large flocks is provided for floor polish washing wastewater. Step (C') may be carried out for a purpose and by a procedure similar to those for step (C) of the above-described method for treating floor polish stripping wastewater.

Also, in the inventive method for treating floor polish washing wastewater, the step (D') of separating flocculated solids and liquid may be provided after step (C'), and may be carried out for a purpose and by a procedure similar to those for step (D) of the above-described method for treating floor polish stripping wastewater.

In addition, in the inventive method for treating floor polish washing wastewater, the step (B') of adding an acidic substance and producing aggregated particles by adjusting the pH of raw washing wastewater at 25°C to between 5 and 8 may be provided before step (C'). This step may be carried out for a purpose and by a procedure similar to those for step (B) of the above-described method for treating floor polish stripping wastewater.

Finally, in the inventive method for treating floor polish washing wastewater, the step (A') of adding a nonadhesive cohesion-preventing agent having a poor ionic dissociation in water may be provided before step (B'), and may be carried out for a purpose and by a procedure similar to those for step (A) of the above-described method for treating floor polish stripping wastewater.

In above steps (A') to (C') of the inventive method for treating floor polish washing wastewater, as in the earlier described method for treating floor polish stripping wastewater, in order to have a uniform reaction proceed, it is desirable to carry out these steps while stirring the washing wastewater. Stirring may be carried out using a stirring rod or an agitator. Also, it is possible to use chemicals such as a salting-out agent and a polymer flocculant other than a polyamidine polymer flocculant, or to add, for example, a deodorizing and solvent adsorption step using activated carbon or the like.

As described above, an advantage of the present invention is that, when adhesive components suspended or dissolved in washing/stripping wastewater are converted into solid particles and flocculating and separating operations are carried out, trouble such as sticking to the filtration unit material and the clogging of pores is largely avoided, enabling separation into flocculated solids and a liquid (solid-liquid separation) to be carried to be easily and and economically.

### EXAMPLES

The invention is illustrated more fully below by way of working examples and comparative examples, although the examples are not intended to limit the invention.

The following stripping wastewaters A to E and washing wastewaters I and II (in amounts of 15 liters each) collected from worksites were treated by the methods for treating floor polish stripping wastewater or the methods for treating floor polish washing wastewater in Examples 1 to 11 and Comparative Examples 1 to 6 shown subsequently in Tables 1 to 4. Numerical values in the tables indicate the amounts in grams of the various chemicals used in treatment. In each of these cases, the step of separation into flocculated solids and liquid was carried out.

Concerning the tests performed at this time--i.e., pH following treatment, filtration efficiency, filtrate appearance, and stickiness of filtration residues, the following test methods and criteria were used to obtain ratings. The results are shown collectively in Tables 1 to 4 below.

### Stripping Wastewaters

Stripping Wastewater A: The resin film "Status" was stripped with the stripper "J Remover S" (12-fold dilution). The nonvolatiles content (abbreviated below as "NV") was 5.9%; pH = 9.9.
Stripping Wastewater B: The resin film "Status" was stripped with the stripper "J Remover S" (8-fold dilution). NV = 8.4%; pH = 10.3.
Stripping Wastewater C: The resin film "Grand Prix" was stripped with the stripper "J Remover" (15-fold dilution). NV = 2.6%; pH = 11.0.
Stripping Wastewater D: The resin film "Karuwazaoh" was stripped with the stripper "Power Go Premium" (5-fold dilution). NV = 2.3%; pH = 11.0.
Stripping Wastewater E: The resin film "Green Plus Wax" was stripped with the stripper "All Go HG" (15-fold dilution). NV = 3.6%; pH = 9.4.

### Washing Wastewaters

Washing Wastewater I: The resin film "Green Plus Wax" was washed with the floor cleaner "Deep Scrubber" (60-fold dilution). NV = 2.1%; pH = 8.1.
Washing Wastewater II: The resin film «Green Plus Wax» was washed with the floor cleaner "Murin Forward" (60-fold dilution). NV = 0.9%; pH = 7.6.

The following flocculants were used in the working examples and comparative examples in Tables 1 to 4.
1% Aqueous Solution of CV-300: An aqueous solution obtained by diluting ARONFLOC CV-300 (available under this trade name from MT AquaPolymer, Inc.; chemical name: acrylamide - acrylonitrile - N-vinylacrylamidine hydrochloride - N-vinylacrylamide - vinylamine hydrochloride - N-vinylformamide copolymer) to 1% with ion-exchanged water.
1% Aqueous Solution of KP-7000: An aqueous solution obtained by diluting DIAFLOC KP-7000 (available under this trade name from Dia-Nitrix Co., Ltd.; chemical name: acrylamide - acrylonitrile - N-vinylacrylamidine hydrochloride - N-vinylacrylamide - vinylamine hydrochloride - N-vinylformamide copolymer) to 1% with ion-exchanged water.
0.1% Aqueous Solution of A-100: An aqueous solution obtained by diluting ACCOFLOC A-100 (a polyacrylamide-type anion flocculant available under this trade name from MT AquaPolymer, Inc.) to 4.1% with ion-exchanged water.
0.2% Aqueous Solution of C-508: An aqueous solution obtained by diluting ARONFLOC C-508 (a polyacrylate-type cation flocculant available under this trade name from MT AquaPolymer, Inc.) to 0.2% with ion-exchanged water.

### (1) pH After Treatment

### Test Method:

The pH of the raw stripping wastewater or washing wastewater after flocculation treatment was measured at 25°C, based on JIS Z-8802: 1984 "pH Measurement Methods".

### (2) Filtration Efficiency

### Test Method:

A polyethylene net (approximately 65 mesh; manufactured by NBC) was attached on top of a substantially hemispherical stainless steel strainer (diameter, 31 cm) placed over the opening in an 18-litter pail, and the time in minutes required for filtration when filtering 15 L of stripping wastewater or washing wastewater following flocculation treatment was measured. The results were rated according to the following criteria.

### Rating Criteria:

Very Good (VG): Less than 1 minute.
Good: At least 1 minute, but less than 3 minutes.
Fair: At least 3 minutes, but less than 10 minutes.
Poor: 10 minutes or more.
Here, a rating of "Very Good" or "Good" indicates a practical level of filtration efficiency.

### (3) Appearance of Filtrate

### Test Method:

In the filtration efficiency test in (2) above, the appearance of the solid-liquid separated filtrate was visually examined, then rated according to the following criteria.

### Rating Criteria:

Very Good (VG): Substantially clear.
Good: Slight clouding is observable.
Fair: Clouding is clearly observable.
Poor: Considerable dark clouding is observable.
Here, a rating of "Very Good" or "Good" indicates a filtrate appearance which is acceptable for practical purposes.

### (4) Stickiness of Filtration Residues

### Test Method:

In the filtration efficiency test in (2) above, the filtration residues remaining on the polyethylene net from solid-liquid separation were examined by touch, then rated according to the following criteria.

### Rating Criteria:

Very Good (VG): Substantially free of stickiness.
Good: Slight stickiness is observable.
Fair: Stickiness is clearly observable. Some adhesion of filtration residues to the filter fabric.
Poor: Considerable stickiness. Considerable adhesion of filtration residues to the filter fabric.
Here, a rating of "Very Good" or "Good" indicates a filtration residue stickiness which is acceptable for practical purposes.

**Table 1**

| | | Examples of the Invention | | | | |
|---|---|---|---|---|---|---|
| | | 1 | 2 | 3 | 4 | 5 |
| Type of stripping wastewater | | A | A | B | C | C |
| A | Calcium sulfate | 450 | | 450 | 575 | |
| | Aluminum oxide | | 450 | | | |
| B | 9% Hydrochloric acid | | | 4,900 | | |
| | 9% Sulfuric acid + 10% sulfamic acid | 2,250 | 2,750 | | 2,100 | 2,100 |
| | 50% Sulfuric acid | | | | | |
| C | 1% Aqueous solution of CV-300 | 345 | 410 | 325 | | |
| | 1% Aqueous solution of KP-7000 | | | | 355 | 375 |
| Rating results | pH | 5.7 | 6.0 | 6.2 | 6.5 | 6.4 |
| | Filtration efficiency | VG | VG | VG | VG | VG |
| | Appearance of filtrate | VG | VG | VG | VG | good |
| | Stickiness of filtration residues | VG | VG | VG | VG | VG |

**Table 2**

| | | Examples of invention | | |
|---|---|---|---|---|
| | | 6 | 7 | 8 |
| Type of stripping wastewater | | C | D | E |
| A | Calcium sulfate | 450 | 900 | 450 |
| | Aluminum oxide | | | |
| | 9% Hydrochloric acid | | | |
| B | 9% Sulfuric acid + 10% sulfamic acid | | 4,600 | 800 |
| | 50% Sulfuric acid | 550 | | |
| C | 1% Aqueous solution of CV-300 | 570 | 480 | |
| | 1% Aqueous solution of KP-7000 | | | 270 |
| Rating results | pH | 6.0 | 6.4 | 5.3 |
| | Filtration efficiency | VG | VG | VG |
| | Appearance of filtrate | VG | VG | VG |
| | Stickiness of filtration residues | VG | good | VG |

**Table 3**

| | | Examples | | | Coup. Ex. | |
|---|---|---|---|---|---|---|
| | | 9 | 10 | 11 | 5 | 6 |
| Type of washing wastewater | | I | I | II | II | II |
| A' | Calcium sulfate | 450 | | | | |
| | Aluminum oxide | | | | | |
| B' | 9% Hydrochloric acid | | | | | |
| | 9% Sulfuric acid +10% sulfamic acid | 105 | 105 | | | |
| | 50% Sulfuric acid | | | | | |
| C' | 1% Aqueous solution of CV-3DD | 700 | 850 | 900 | | |
| | 1 % Aqueous solution of KP-7000 | | | | | |
| | 0.1% Aqueous solution of A-100 | | | | 2,350 | |
| | 0.2% Aqueous solution of -508 | | | | | 4,550 |
| Rating results | pH | 5.3 | 5.5 | 7.2 | 7.8 | 5.4 |
| | Filtration efficiency | VG | VG | VG | good | good |
| | Appearance of filtrate | VG | good | good | poor | fair |
| | Stickiness of filtration residues | VG | VG | VG | VG | VG |

**Table 4**

| | | Comparative Examples | | | |
|---|---|---|---|---|---|
| | | 1 | 2 | 3 | 4 |
| Type of stripping wastewater | | D | C | C | C |
| A | Calcium sulfate | | 450 | 450 | 450 |
| | Aluminum oxide | | | | |
| B | 9% Hydrochloric acid | | | | |
| | 9% Sulfuric acid + 10% sulfamic acid | 7,300 | 2,100 | 2,100 | 2,100 |
| | 50% Sulfuric acid | | | | |
| C | 0.1% Aqueous solution of A-100 | | | 3,000 | |
| | 0.2% Aqueous solution of C-508 | | | | 3,000 |
| Rating results | pH | &.4 | 6.4 | 7.0 | 5.3 |
| | Filtration efficiency | fair | fair | poor | poor |
| | Appearance of filtrate | fair | poor | fair | fair |
| | Stickiness of filtration residues | poor | good | fair | fair |

Analytical values obtained for five tests-pH, biological oxygen demand (BOD), suspended solids (SS), n-hexane-extractable material and zinc--before treatment and after treatment in Stripping Wastewater A of Example 1 are shown in Table 5 below.

**Table 5**

| | Before treatment | After treatment |
|---|---|---|
| pH | 9.9 | 5.7 |
| BOD (mg/L) | 74,000 | 41,000 |
| SS (mg/L) | 12,000 | 10 |
| n-Hexane extractable material (mg/L) | 3,900 | 46 |
| Zinc (mg/L) | 120 | 42 |

Analytical values obtained for four tests-pH, biological oxygen demand (BOD), suspended solids (SS) and n-hexane-extractable material-before treatment and after treatment in Washing Wastewater I of Example 9 are shown in Table 6 below.

**Table 6**

| | Before treatment | After treatment |
|---|---|---|
| pH | 8.1 | 5.3 |
| BOD (mg/L) | 3,600 | 1,800 |
| SS (mg/L) | 13,400 | 12 |
| n-Hexane extractable material (mg/L) | 2,800 | 28 |

It is apparent that, in above Examples 1 to 11, good results were obtained in all the tests-pH, filtration efficiency, filtrate appearance and stickiness of filtration residues-following treatment. Of these examples, it was apparent that, in Example 11, when the pH of the washing wastewater before treatment is 7.6, flocculation can be induced without the prior addition of a cohesion-preventing agent and an acidic substance-that is, with the addition of merely an aqueous solution of a polyamidine-type polymer flocculant, and also that filtration occurred in a short period of time.

On the other hand, in Comparative Example 1, when an acidic substance was added dropwise without the addition of a cohesion-preventing agent, viscous masses formed. These masses wrapped onto the stirring elements of the agitator. In addition, during filtration, clogging of the pores in the filter fabric arose, as a result of which filtration took an inordinate amount of time.

Comparative Examples 2 to 4 are tests where, in place of the step in the Example 1 treatment method of adding a polyamidine polymer flocculant to induce the formation of large flocks, a flocculant was not added (Comparative Example 2), the anionic flocculant ACCOFLOC A-100 (MT AquaPolymer, Inc.) was added (Comparative Example 3), or the cationic flocculant ARONFLOC C-508 (MT AquaPolymer, Inc.) was added (Comparative Example 4). In Comparative Example 2, not only did the filtration efficiency decrease, the filtrate appearance did not improve and was cloudy, remaining substantially unchanged relative to before filtration. In Comparative Examples 3 and 4, not only was the filtration efficiency very poor, no substantial improvement was observable in the filtrate appearance.

Comparative Examples 5 and 6 are cases in which a prior-art polymer flocculant was used. Although a good filtration efficiency does appear at first to have been obtained, because the polymer flocculant did not fully function, the desired flocks did not form. As a result, the contaminants were not taken up by the polymer flocculant, leaving the filtrate cloudy.

In Comparative Example 7, aside from setting the pH to 3 by the excessive addition of acidic substance in step (B), the same procedure was followed as in Example 1. Fine aggregated particles formed and what appeared to be a good filtration efficiency was obtained. Yet, although a polymer flocculant was added, this did not fully function and flock formation did not occur. As a result, the filtrate remained cloudy.

In Comparative Example 8, aside from adding only a very small amount of acidic substance in step (B) and setting the pH to 9, the same procedure was followed as in Example 1. The amount of aggregated particles that formed was very small. In addition, even when a polyamidine-type polymer flocculant was added, flocculation did not occur and no flocks formed. Comparative Examples 5 to 8 failed to satisfy the requirements for practical utility.

## Claims

1. A method for treating floor polish stripping wastewater comprising at least the following steps (B) and (C) implemented with respect to the polish stripping wastewater:
(B) a step of adding an acidic substance and producing aggregated particles by adjusting a pH (JIS Z-8802:1984 "pH Measurement Methods") of raw stripping wastewater at 25°C to 5 to 8;
(C) a step of adding a polyamidine polymer flocculant and forming large flocks from the aggregated particles.

2. The method for treating floor polish stripping wastewater according to claim 1, comprising a step (A) of adding a nonadhesive cohesion-preventing agent with poor ion dissociation in water before implementing the step (B).

3. The method for treating floor polish stripping wastewater according to claim 1, comprising a step (D) of separating the flocculated solids and liquid after implementing the step (C).

4. The method for treating floor polish stripping wastewater according to claim 2, comprising a step (D) of separating the flocculated solids and liquid after implementing the step (C).

5. The method for treating floor polish stripping wastewater according to claim 2 and/or 4, wherein the cohesion-preventing agent used in the step (A) is at least one selected from aluminum oxide and calcium sulfate.

6. The method for treating floor polish stripping wastewater according to any one of claims 1 to 5, wherein the acidic substance used in the step (B) is at least one selected from sulfuric acid, hydrochloric acid, sulfamic acid, and citric acid.

7. A method for treating floor polish washing wastewater, comprising at least a step (C') of adding a polyamidine polymer flocculant and forming large flocks to be implemented with respect to polish washing wastewater.

8. The method for treating floor polish washing wastewater according to claim 7, comprising a step (D') of separating the flocculated solids and liquid after implementing the step (C').

9. The method for treating floor polish washing wastewater according to claim 7 and/or 8, comprising a step (B') of adding an acidic substance and producing aggregated particles by adjusting a pH (JIS Z-8802:1984 "pH Measurement Methods") of raw washing wastewater at 25°C to 5 to 8 before implementing the step (C').

10. The method for treating floor polish washing wastewater according to claim 9, comprising a step (A') of adding a nonadhesive cohesion-preventing agent with poor ion dissociation in water before implementing the step (B').

11. The method for treating floor polish washing wastewater according to claim 10, wherein the cohesion-preventing agent used in the step (A') is at least one selected from aluminum oxide and calcium sulfate.

12. The method for treating floor polish washing wastewater according to any one of claims 9 to 11, wherein the acidic substance used in the step (B') is at least one selected from sulfuric acid, hydrochloric acid, sulfamic acid, and citric acid.
